(19) Europäisches Patentamt

European Patent Office

Office européen des brevets

(11) **EP 3 822 306 B1**

(12) # EUROPEAN PATENT SPECIFICATION

(45) Date of publication and mention
of the grant of the patent:
**13.08.2025 Bulletin 2025/33**

(21) Application number: **19208785.6**

(22) Date of filing: **13.11.2019**

(51) International Patent Classification (IPC):
*C08J 5/18* (2006.01)     *B32B 27/08* (2006.01)
*B32B 27/20* (2006.01)     *B32B 27/32* (2006.01)
*B32B 27/34* (2006.01)     *C08K 3/26* (2006.01)
*B65D 81/24* (2006.01)

(52) Cooperative Patent Classification (CPC):
(C-Sets available)
**C08J 5/18; B32B 27/08; B32B 27/20; B32B 27/32;
B32B 27/34; C08K 3/26;** B32B 2264/102;
B32B 2264/104; B32B 2270/00; B32B 2307/7242;
B32B 2307/7265; B32B 2439/46; B32B 2439/70;
B65D 81/24; C08J 2323/06;          (Cont.)

(54) **FILMS FOR PACKAGING OF FOODSTUFFS**

FOLIEN ZUR VERPACKUNG VON LEBENSMITTELN

FILMS D'EMBALLAGE DE PRODUITS ALIMENTAIRES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**19.05.2021 Bulletin 2021/20**

(73) Proprietor: **CSIR**
**0001 Pretoria (ZA)**

(72) Inventors:
• **Bandyopadhyay, Jayita**
  **0081 Pretoria (ZA)**
• **Ray, Suprakas Sinha**
  **0081 Pretoria (ZA)**
• **Motloung, Mpho**
  **1501 Benoni (ZA)**
• **Zungu, Simphiwe**
  **3000 Dundee (ZA)**
• **Lekalakala, Rakgoshi K**
  **1685 MIDRAND (ZA)**
• **Skosana, Sifiso**
  **0458 Mpumalanga (ZA)**
• **Scriba, Manfred**
  **0184 Pretoria (ZA)**
• **Khoza, Mary**
  **0331 RUSTENBURG (ZA)**
• **Ojijo, Vincent**
  **0081 Pretoria (ZA)**

• **Mapoko, Lesley**
  **0152 Soshanguve (ZA)**

(74) Representative: **Jeck, Anton**
**Jeck, Fleck & Partner mbB**
**Patentanwälte**
**Klingengasse 2**
**71665 Vaihingen/Enz (DE)**

(56) References cited:
CN-A- 103 407 259        US-A1- 2004 105 942
US-A1- 2005 001 204      US-A1- 2005 037 162
US-A1- 2005 230 415      US-B2- 8 474 368

• PETER MAUL: "BARRIER ENHANCEMENT
USING ADDITIVES Fillers, Pigments and
Additives for Plastics in Packaging
Applications", 5 December 2005 (2005-12-05),
XP055680066, Retrieved from the Internet
<URL:https://pdfs.semanticscholar.org/ce25/
a2e921cc53ea508a26c132f8ade4f83189d9.pdf>
[retrieved on 20200326]
• NATTINEE BUMBUDSANPHAROKE ET AL:
"Nanoclays in Food and Beverage Packaging",
JOURNAL OF NANOMATERIALS, vol. 2019, 29
January 2019 (2019-01-29), US, pages 1 - 13,
XP055680071, ISSN: 1687-4110, DOI: 10.1155/
2019/8927167

**EP 3 822 306 B1**

**(Cont. next page)**

(52) Cooperative Patent Classification (CPC): (Cont.)
C08K 2003/265

C-Sets
**C08K 3/26, C08L 23/06**

## Description

### Technical field of the invention

This invention relates to films for packaging of foodstuffs according to claim 1.

### Background to the invention

The inventor is aware of the use of flexible films for packaging foodstuffs such as wine and fruit juice. Such packaging of liquid foodstuffs are often also packaged and supported in a box and known as "Bag-in-Box" packaging. Typically, the main oxygen barrier will be an aluminium film layer however, this layer is prone to damage during transport and is not recyclable and not transparent which prevents the food-stuffs being visible through the film. The main objective of the films is to extend the shelf life of the foodstuffs for as long as possible by limiting exposure of the food-stuffs to oxygen, light and microorganisms.

It is an objective of the invention to provide films for packaging foodstuffs with improved shelf life.

U5 2005/037162 A1discloses a laminate structure having improved resistance to the migration of essential oils, aromas and flavors and improved oxygen barrier characteristics for beverage packaging comprising an exterior coating of polyethylene applied onto the outer surface of paperboard substrate, a barrier layer of aluminum foil, EVOH, polyamide or PET applied directly or indirectly onto the paperboard and tie and other sublayers which may or may not contain inorganic filler applied intermediate the barrier layer and the innermost food contact layer which may or may not contain filler. The containers or cartons prepared from the laminate structures are characterized by minimized scalping and preserved product quality.

US2005001204A1 teaches a compound permitting the economic production of packaging containers, which when activated produces concentrated amounts of $CO_2$ gas for extended periods for preservation of perishable products therein, comprises a mixture including a $CO_2$ generating portion incorporated within a polymer matrix. Preferably, the mixture includes citric acid; calcium carbonate, and polyethylene resin. More preferably, the mixture includes a mixture of a carboxylic acid (0.1-40%); a hydrogen carbonate (0.1-40%) and any polyolefin resin. Even more preferably, the mixture includes a mixture including (0.01-40%) Citric Acid; (0.01-40%); and 30-75% polyethylene resin. Most preferably, the mixture includes by weight 12% citric acid; 38% calcium carbonate; and 50% low density polyethylene resin with a melt index of 20 and a density of 0.924 g/cc. Alternatively, the carboxylic acid and hydrogen carbonate components are compounded into separate polymer matrixes, and later combined. The compound may be packaged in containers that are formed of flexible or rigid material.

US 2004/105942 shows a heat sealable barrier layer for food and beverage cartons is provided, the barrier layer including an additive material which reduces the amount of essential oil scalping from citrus products. Additionally, a carton coating layer and process is provided for reducing a coefficient of friction of stacked carton blanks. An additional embodiment of the invention provides for a paperboard substrate having reduced water vapor transmission rates, the reduction in water vapor transmission rates being attributed to one or multiple extruded layers containing an effective amount of an inorganic additive.

CN 103 407 259 discloses a flexible packaging material with an oxygen adsorption function based on natural gallic acid, a preparation method for the packaging material and an application of the packaging material, and belongs to the technical field of packaging materials. The flexible packaging material comprises at least four functional structure layers. The outmost layer is an oxygen blocking layer. An oxygen adsorption layer, which comprises the gallic acid and a polyurethane binder, is below the oxygen blocking layer. An activation layer (catalyst layer), which comprises sodium carbonate and EVA resin, is below the oxygen adsorption layer. The innermost layer, below the activation layer, is a food contacting layer and also an oxygen permeating layer. On contacting water vapor, oxygen adsorption film prepared by the method starts the oxygen adsorption function and slowly generates an inert gas carbon dioxide at the same time. The packaging material is particularly suitable for storage and fresh-keeping of beer, fruit juice and sodas, and is capable of avoiding oxidization of nutritional ingredients of oxygen sensitive food and beverage, improving food quality and prolonging the shelf life.

Peter Maul "BARRIER ENHANCEMENT USING ADDITIVES" overviews general approaches to enhancing plastic package barrier and provides details about the use of additives to accomplish the goal. Particular emphasis is given to the role of nanotechnology in barrier packaging.

"Nanoclays in Food and Beverage Packaging" by Nattinee Bumbud-sanpharoke and Seonghyuk Ko discusses the technical benefits of using nanoclays as a promising property enhancer in organic polymers for food and beverage packaging. The incorporation of nanoclays can improve the thermal, mechanical and barrier properties of a host polymer.

## General description of the invention

According to the invention there is provided a composite active flexible polymeric film for containers for containing acidic material, which film generates carbon dioxide gas when in contact with the acidic material to settle in the headspace of the container.

The acidic material is acidic foodstuffs which are beverages containing fruity acids material, such as wine and fruit juice. Typically, the container can be selected from the bag in a box type of container.

The film includes more than one layer and the inner layer which is in contact with the acidic material will be active and generate carbon dioxide gas.

At least one layer is a barrier layer. A barrier layer provides a barrier against fluids.

The active film or layer includes a polyethylene calcium carbonate (PE/CaCO$_3$) composite.

The CaCO$_3$ particles may be up to a few micron-size range and incorporated into the polymer. Preferably, the CaCO$_3$ particles may be between 1 and 10 micron, and more preferably about 5 micron.

The concentration of the CaCO$_3$ may be selected to complement the intended product to be packaged by releasing the optimum amount of carbon dioxide.

A blend of Linear Low Density Polyethylene (LLDPE) and Low Density Polyethylene (LDPE) and CaCO$_3$ may be produced by melt extrusion before a film blowing process. The ratio of LLDPE to LDPE may be between 80:20 and 90:10. Apart from the feeding zone (set at 120 °C), the temperatures of the rest of the extrusion process zones including the die can be 160 - 180°C; in this particular instance it is 160 °C. The feed rate and screw speed are maintained at 3.5 kg/h and 202 rpm, respectively. It is to be appreciated that PE has a good resistance to tartaric, malic citric and lactic acids.

The inner layer, which may be blended from Linear Low Density Polyethylene (LLDPE) and Low Density Polyethylene (LDPE), may be produced by melt extrusion before a film blowing process. The ratio of LLDPE to LDPE may be between 80:20 and 90:10, preferably 85:15.

The batch of polyethylene or polyethylene blend may be mixed with a selected weight of MCO$_3$ particles to give a certain weight percentage of CaCO$_3$ in a range of between 15 and 35 weight percent, preferably selected from 20, 25 and 30 weight percent.

The inner active layer of the film is separate from an outer layer to form an active layer container or bag inside the outer layer.

An outer layer is a composite passive barrier layer, which includes nanoclay particles.

The composite passive barrier is polyamide (PA) based. The nanoclay particles may be mixed with the PA and extruded to form the nano composite (PA PNC). The nanoclay can be a bentonite and preferably a Montmorillonite. The nanoclays particle size may be between 50nm and 1 micron in width and length and preferably below 500nm. The nanoclays may be between one silicate layer of about 1nm thickness or may constitute a stack of up to 10 layers of 10 nm thickness but preferably between 1 and 5 layers.

The film may include a PA layer on its operatively outer side and functions as a physical barrier to gas permeation and is not in contact with the foodstuffs.

The film includes a polyacrylic acid (PAA) tie layer between the active barrier layer and the composite passive barrier layer.

In one embodiment, PA PNC is prepared via a masterbatch dilution technique. The processing temperatures for different extrusion zones are selected at 120, 200, 260, 260, 260, 260, 260, 250, 245, 240 (die) °C. The feed rate and the screw speed were 4.4 kg/h and 156 rpm, respectively. According to thermogravimetric analysis (TGA) the inorganic / silicate content of masterbatch is 23 wt%. PA PNC with desired amount of nanoclay can then be prepared by diluting this masterbatch in neat PA. The inorganic content of PA PNC (determined by TGA) is 7 wt%. Before processing, PA and nanoclay were dried at 60 °C overnight and the processed samples were also dried at the same conditions.

The respective layers are co-extruded.

The invention also extends to a container constructed from a film as described above.

The invention also extends to the use of an inner active layer in a composite film as described above as a source of carbon dioxide gas when in contact with the acidic material.

## Description of related art

The traditional function of a packaging is to encase or contain food products to limit the ingress from elements outside the package, which may cause degradation and spoilage. US patent application 2009/0324979A1 discloses multilayer film structures comprising polyethylene (PE)-CaCO$_3$ as a core and outer layer. [1] The CaCO$_3$ in that patent is either steric or palmitic acid coated. Moreover, a salt of polyacrylic acid and/or a salt of copolymer of acrylic acid have been used as a grinding aid during wet-grinding of CaCO$_3$ after surface modification. One or more layers of ethyl vinyl acetate (EVA), ethylene ethyl acetate (EEA), ethylene acrylic acid (EAA) have been used as an inner layer to promote sealing. The authors have claimed that the moisture vapour transmission rate reduces in the presence of CaCO$_3$. Not only that, but also, the surface roughening effect enhances the printability and print register. Addition of $CaCO_3$ has been shown to lower the coefficient of friction too.

EP 1439956 A1 relates to bi-oriented multi-layered PE films having high water-vapour transmission rate **[2].** The base layer (central layer) comprises of PE with $CaCO_3$ as a captivating agent. This layer has been sandwiched between a copolymer (ethylene-propylene co-polymer or ethylene-propylene-butylene ter-polymer) or hydrocarbon resin (e.g. terpene, styrene and cyclopentadiene). The authors claimed that may have unidirectional tear properties in the machine direction and may be useful for packaging food products like candy.

Preparation of breathable micro-porous film by stretching a casting of a composition of a LLDPE (linear low density PE) and $CaCO_3$ and calcium stearate in two directions has been disclosed in US 5011698 **[3].** Such microporous film is desired for disposable items e.g. diapers, bed-sheets, and hospital gowns. LDPE (low density PE) - $CaCO_3$ has also been used to prepare cross-tearable decorative sheet material as disclosed in US 4298647 **[4].** In US 4219453 it has been demonstrated that inorganic filler (e.g. $CaCO_3$) containing ethylene polymers (can be homo and copolymers) exhibit improved mechanical strengths (impact and tear) in presence of steric and palmitic acid mixtures (1:1), zinc stearate and 2,6-di-ter-butyl-p-cerol **[5].** None of these disclosures reports the use of polymer/$CaCO_3$ composite as an inner functional layer for suppression of oxygen through generation of $CO_2$ into the headspace and in the packaged acidic liquid.

One report is available on the PA PNC/tie/PE; where Cloisite30B and Dellite 43B nanoclays were used to prepare PA PNC. LDPE-g-MA was used as a tie layer **[6].** This report can be found at: Garofalo E, Scarfato P, Incarnato L. Tuning of co-extrusion processing conditions and film layout to optimize the performance of multi-layer nanocomposite films for food packaging. Polymer Composites, 2017, DOI 10.1002/pc.24323.

The current invention is a novel film construction that comprises the innovatively utilized PE/$CaCO_3$ composite inner layer and passive barrier layer based on South African nanoclays (Betsopa™).

## Detailed description of the invention

The invention is now described by way of example with reference to the accompanying images.

A blend of Linear Low Density Polyethylene (LLDPE) and Low Density Polyethylene (LDPE) is produced by melt extrusion before a film blowing process. The ratio of LLDPE to LDPE is 85:15.

The $CaCO_3$ particles are in the micron to nano sized range, preferably about 5 micron. The PE Active composite is prepared by mixing the blend of LLDPE and LDPE before extrusion with 20, 25 and 30 weight percent of $CaCO_3$ to obtain different $CaCO_3$ loaded films.

Apart from the feeding zone (set at 120 °C), the temperatures of the rest of the extrusion process zones including the die can be 160 - 180°C; in this particular instance it is 160 °C. The feed rate and screw speed are maintained at 3.5 kg/h and 202 rpm, respectively. It is to be appreciated that PE has a good resistance to tartaric, malic citric and lactic acids.

The nanoclay particles of the composite passive barrier is mixed with the PA and extruded to form the nanocomposite (PA PNC)

The PA PNC can be prepared via a masterbatch dilution technique and by direct incorporation of nanoclay with specific loading.

In one instance, PA PNC is prepared via a masterbatch dilution technique. The processing temperatures for different extrusion zones are selected at 120, 200, 260, 260, 260, 260, 260, 250, 245, 240 (die) °C. The feed rate and the screw speed were 4.4 kg/h and 156 rpm, respectively. According to thermogravimetric analysis (TGA) the inorganic / silicate content of masterbatch is 23 wt%. PA PNC with desired amount of nanoclay can then be prepared by diluting this masterbatch in neat PA. The inorganic content of PA PNC (determined by TGA) is 7 wt%. Before processing, PA and nanoclay were dried at 60 °C overnight and the processed samples were also dried at the same conditions.

A co-rotating twin-screw extruder, with L/D of 40 and a die diameter of 3 mm) is used for processing and extruded samples are collected via a water bath and then pelletized.

The respective films are either single- (not according to the invention) or multi-layered co-extruded blown films.

The main objective and advantage of the invention is the controlled release of $CO_2$ from the PE active film, to enhance the shelf life of beverages containing fruity acids by displacing dissolved oxygen from the liquid and creating a positive pressure.

Single-layer PE Active (not according to the invention) with varied concentration of $CaCO_3$ and neat PE films demonstrate that PE Active can release $CO_2$ when in contact with fruity acid such as tartaric acid.

PE Active layer is also integrated in a multi-layered film by addition to PA PNC which provides passive oxygen barrier.

EXAMPLE 1 (not according to the invention)

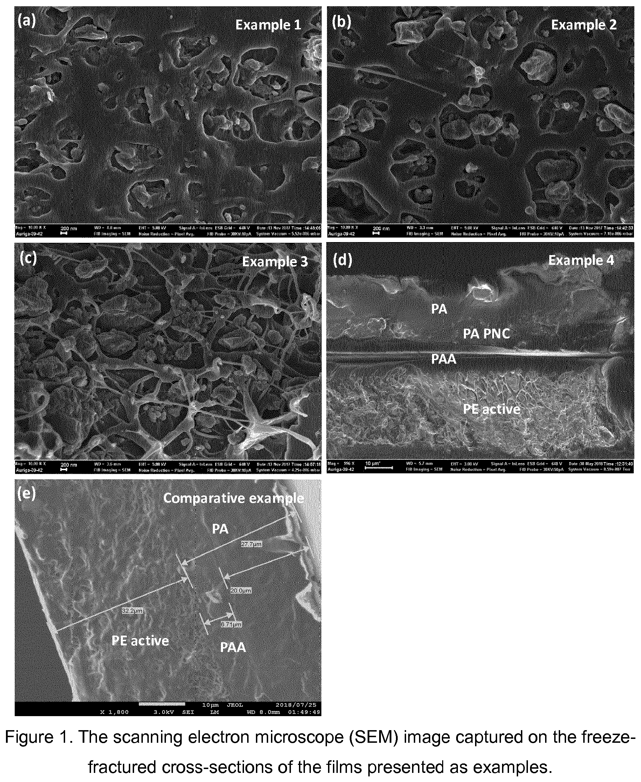

Single-layer PE Active with 20% $CaCO_3$ (Example 1). The composition of the film and the key film processing parameters are tabulated in **Table 1.** The scanning electron microscope (SEM) image captured on the freeze-fractured cross-sections of the film is presented in **Figure 1a.** The circular patterns represent the dispersed Ca-$CO_3$ particles. The $CaCO_3$ embedded active films generates $CO_2$ while in contact with acidic fluid over a period of time and eventually create a positive pressure inside the pouch / container and block the permeation of oxygen from the atmosphere. It is important to note that the inventors found that incorporation of $CaCO_3$ does not affect the inherent sealing properties of PE.

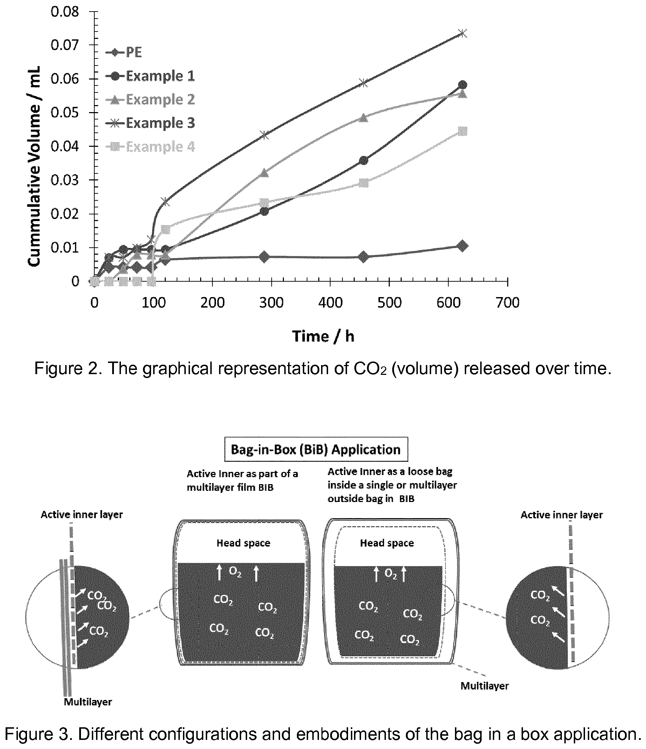

Quantification of release of $CO_2$ gas is determined by bottle-tube displacement experiments (refer to APPENDIX-A) from the reaction of the tartaric acid solution with the experimental film. The graphical representation of $CO_2$ (volume) released over time is presented in **Figure 2.** It is evident that over time, tartaric acid penetrates the film, reacts with $CaCO_3$ in the film, and releases $CO_2$. The neat PE film containing 85% LLDPE and 15% LDPE does not exhibit such $CO_2$ release capability. In most cases, the visible change is noticeable approximately after 4 days.

EXAMPLE 2 (not according to the invention)

Single-layer PE Active with 25% $CaCO_3$ (Example 2) shows the effect of Ca-$CO_3$ concentration of the particles on the $CO_2$ release. The composition of the film and the key film processing parameters are tabulated in **Table 1.** The SEM image captured on the freeze-fractured cross-sections of the film is presented in **Figure 1b.** It is evident from the figure that reactive sites increase with the loading of $CaCO_3$. As a result, the release of $CO_2$ increases (refer to **Figure 2).** Therefore, it is to be expected that as the concentration of $CaCO_3$ increases, more $CaCO_3$ particles will be available for the reaction with acid in the contained foodstuffs.

EXAMPLE 3 (not according to the invention)

Further concentration of $CaCO_3$ is increase to 30% in the single-layer PE Active film (Example 3). The composition of the film and the key film processing parameters are tabulated in **Table 1.** The SEM image captured on the freeze-fractured cross-sections of the film is presented in **Figure 1c.** It is evident from the figure that the surface roughness increases with the loading of $CaCO_3$ and more sites are available for the targeted reaction. Subsequently, the release of $CO_2$ increases as observed in **Figure 2.** The contact area can be manipulated by optimum loading of Ca-$CO_3$ and/or by process induced porous structure formation.

EXAMPLE 4

PE active (similar as EXAMPLE2) composite is integrated in a multi-layered active-passive barrier film where the dispersed nanoclays in PA PNC retards the ingress of oxygen by creating tortuosity (Example 4). The composition of the film and the key film processing parameters are tabulated in **Table 1.** The SEM image captured on the freeze-fractured cross-sections of the film is presented in **Figure 1d**. Presence of multiple layers are clearly visible in **Figure 1d** and the thickness of PE active layer is approximately 32 $\mu$m. The volume of $CO_2$ released from the film is presented in **Figure 2.** The multi-layered structure is the less reactive than the single layered films containing different concentration of $CaCO_3$ (EXAMPLES 1 - 3). However, it exhibits slow release of $CO_2$ over time. The amount of $CO_2$ that will be released over 1, 3 and 6-month period is estimated using a curve fitting of polynomial of order 2. The estimated $CO_2$ release from the film after 1, 3, 6-month are 6, 22 and 146 ppm, respectively. Such concentration of $CO_2$ falls within the prescribed limit. For the safety reason, in case of BIB package the amount of $CO_2$ specified is <600-800 ppm. Above 600-800 ppm the bag may swell when the temperature rises as the $CO_2$ comes out of solution.

$CO_2$ becomes perceptible to the human palate at around 1 g/l, which creates a slight spritz on the tongue. The recommended concentrations of $CO_2$ (at 20 °C) in still, semi-sparkling and the sparkling wines are < 2 g/l, 2 to 5 g/l and > 6 g/l, respectively. According to wine makers, $CO_2$ limit in sauvignon blanc and aromatic whites, Chardonnay and red wines are respectively 1000 - 1100, 800 and < 500 ppm in and less than 500 ppm. Generally, the accepted concentrations of $CO_2$ in the red and white wines are different; specifications are about a maximum of 400 ppm for reds and 600-800 ppm for white wines.

Higher concentration of $CO_2$ gives crisper wine with lower dissolved oxygen, but less flavor intensity. However, a bit of $CO_2$ helps preserving the wine. Addition of Sulfur dioxide ($SO_2$) to the wine during fermentation is a common practice to extend the shelf-life. $SO_2$ itself is a gas, but readily reacts with water and forms bisulfite / sulfite. The formation of sulfite depends on the pH of water. It increases logistically with increase in pH. This sulfite binds to the anthocyanins, a phenolic molecule that gives red color to the wine. As a result, the $SO_2$ containing red wines have less intense color. This reaction reduces the chance of reaction between the anthocyanin and the dissolved oxygen. The reaction between anthocyanin and the dissolved oxygen produces acetaldehyde and gives wine a brownish hue. The level of free $SO_2$ upon filling is often 25-50 ppm. However, it falls over time; the free left after 9 months can be 12 ppm. $SO_2$ can prevent wine oxidation, but it can have adverse allergic effects. Since $CO_2$ as a blanket over the surface of wine can help prevent oxidation and the growth of spoilage organisms, a slow release of $CO_2$ over time can compensate the loss of $SO_2$ and prolong the shelf life of wine. Not only that, it might allow reduction of the initial $SO_2$ concentration to reduce the health risk.

Typical properties of the multi-layered active-passive barrier film is summarised in **Table 2.** The typical oxygen permeation for the film is 1.49 cc-mm/m$^2$.day at 0% RH. In comparison to the Comparative example, where neat PA is used as a passive barrier instead of PAPNC, there is approximately 51% reduction in oxygen permeation. The transparency of the film is measured using UV-Vis spectrometer and the transmittance before and after exposure to humidity (37% RH, 30 °C for 24h) are respectively 89.47% and 89.02%. As depicted in **Table 2,** replacing PA by PA PNC does not have any effect the transparency of the film. Overall, tensile properties of the multi-layered active passive barrier film is also better than the comparative example.

Safety and migration of nanoparticles from the packaging film is of utmost importance in any application. Migration of nanoclay constituents from the co-extruded multi-layered films (Example 4 and Comparative example) are presented in **Tables 3 and 4.** Inductively coupled plasma mass spectroscopy (ICP-MS) and graphite furnace atomic spectroscopy (GFAAS) have been used to quantify the amount of inorganic contents (Mg, Al, and Si are used as main markers) migrated into Type C simulant (Following EU10/2011 regulatory procedure) recommended for high alcohol containing food and beverages. Whereas High performance liquid chromatography (HPLC) coupled with MS has been employed to quantify the organic content migrated from the representative films. The effect of storage time of the film prior to the exposure to the simulant is investigated. The concentration of Mg, Al and Si migrated from the films to the simulant are tabulated in **Table 3.** The point to be noted is that according to Swiss Ordinance from the Federal Department of Home Affairs FDHA Federal Food Safety and Veterinary Office FSVO Annex 10 of the Ordinance of the FDHA on materials and articles intended to come into contact with food-stuffs, List of permitted substances for the production of packaging inks, and related requirements, 2017, nanoclay is recognised as a class-A material and safe. For class-B material, the default specific migration limit is 0.01 ppm **[7].** Some results indicate that no nanoclay compositions are below detection limit (BDL) or in the range of ppb concentration. In addition, presence of porous active inner layer does not induce migration of clay constituents into food simulant.

HPLC-MS results are summarized in **Table 4.** Migration concentration trend of precursor ions from the surfactant used to modify the nanoclay with storage time is quite stable and is not expected to give rise to safety concerns of estimated 50 µg.kg$^{-1}$ or 0.05 ppm of dimethylalkyl (C16-C18) amines migration according to a Food Contact Materials, Enzymes, Flavourings and Processing Aids (CEF) panel, see EFSA Panel on Food Contact Materials, Enzymes, Flavourings and Processing Aids (CEF). EFSA J. 2015, 13, 4285 **[8].**

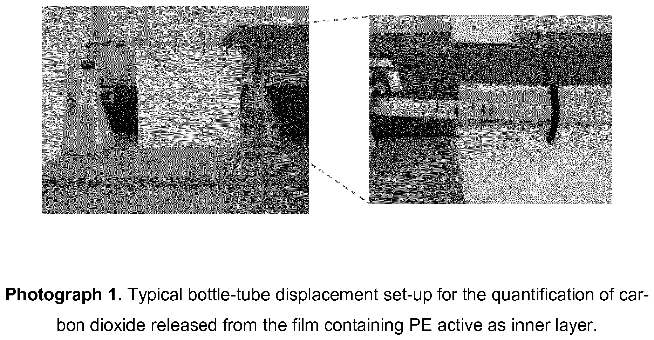

Figure 3 shows diagrammatically different configurations and embodiments of the bag in a box application of the invention.

COMPARATIVE EXAMPLE

Multi-layered film comprises of PE Active and PA as a passive gas barrier layer (Comparative example). The composition of the film and the key film processing parameters are tabulated in **Table 1.** The typical oxygen permeation for the film is 3.07 cc-mm/m$^2$.day at 0% RH. The transparency of the film is measured using UV-Vis spectrometer and the transmittance before and after exposure to humidity (37% RH, 30 °C for 24h) are respectively 88.88% and 88.17%. The tensile properties of the film is also reported in **Table 2** and the film exhibits similar properties in both machine and transverse direction.

The film in comparative example is used as a control to quantify the migration of nanoclay constituents from the film presented in EXAMPLE 4. Though the comparative example does not contain nanoclay, there are some traces of Mg, Al, and Si detected in GFAAS. Such result may originate from instrument error and/or sampled deionised water.

**Table 1.** The composition of the film and the key film processing parameters.

| Film codes | Material | Screw speed (rpm) | Temperature (°C) | Film thickness (μm) |
|---|---|---|---|---|
| Example 1 | 68% LLDPE - 12% LDPE / 20% $CaCO_3$ | 40 | 150;165;175;185;190;200 | 50 |
| Example 2 | 63.75% LLDPE - 11.25% LDPE / 25% $CaCO_3$ | 40 | 150;165;175;185;190;200 | 60 |
| Example 3 | 59.5% LLDPE - 10.5% LDPE / 30% $CaCO_3$ | 80 | 150;165;175;185;190;200 | 57 |
| Example 4 | LD-LLD PE / 25% $CaCO_3$ | 75 | 150;165;175;185;190;200 | 58 |
| | PAA | 15 | 150;170;185;190;200 | |
| | PA PNC | 35 | 195;200;210;220;220;230 | |
| | PA | 15 | 195;200;210;220;220;230 | |
| Comparative example | LD-LLD PE / 25% $CaCO_3$ | 75 | 150;165;175;185;190;200 | 60 |
| | Poly acrylic acid (tie) | 15 | 150;170;185;190;200 | |
| | PA | 35 | 195;200;210;220;220;230 | |
| | PA | 15 | 195;200;210;220;220;230 | |

Table 2. The properties of the multi-layered films.

| Film code | Oxygen permeation (cc-mm/m$^2$.day) | Transparency | | Tensile -machine direction | | | Tensile -transverse direction | | |
|---|---|---|---|---|---|---|---|---|---|
| | | before moisture exposure (%) | after moisture exposure (37%rh, 30 °C for 24h) (%) | Modulus (MPa) | Load at yield (N) | Stress at yield (MPa) | Modulus (MPa) | Load at yield (N) | Stress at yield (MPa) |
| Example 4 | 1.49 | 89.47 | 89.02 | 589± 74.1 | 43.5± 3.9 | 31.1±2.8 | 560.7±18.38 | 29.8± 1.7 | 21.3± 1.2 |
| Comparative example | 3.07 | 88.88 | 88.17 | 399.4±54.1 | 23.4 ± 1.7 | 16.2± .2 | 408.4±59.93 | 22.1± 2.1 | 15.8 ±1.5 |

**Table 3.** Migration of inorganic compositions of Bentonite nanoclay from the multi-layered films determined by ICP-MS and GFAAS.

| Sample | ICP-MS | | GFAAS | | |
| --- | --- | --- | --- | --- | --- |
| | Mg (ppb) LoD* = 0.0402 ppb | Al (ppb) LoD = 0.2324 ppb | Mg (ppb) | Al (ppb) | Si (ppb) |
| Comparative example - as prepared | BDL** | BDL | 54.25 ± 1.3 | 4.76 ± 0.1 | 400.4 ± 43.36 |
| Comparative example - 3 m | BDL | BDL | BDL | 2.42 ± 0.5 | 369.9 ± 22.82 |
| Comparative example - 6 m | 961 | BDL | 2.95±0.2 | BDL | 157.3±36.93 |
| Example 4 - as prepared | 312 ± 0 | 458 ± 0 | 57.74 ± 9.7 | 403.4 ± 112.7 | 678.0 ± 262.4 |
| Example 4 - 3 m | BDL | BDL | 55.81 ± 2.4 | 2.50 ± 0.1 | 741.0 ± 43.73 |
| Example 4 - 6 m | BDL | BDL | 25.00 ± 0.1 | 3.42 ± 0 | 326.6 ± 28.82 |
| *LoD: Limit of detection; **BDL: Below detection limit of the instrument | | | | | |

**Table 4.** The surfactant precursor ions determined in the migrant simulant by HPLC.

| Migrant in contact with films | $C_{16}C_{16}$ (ppm) | $C_{16}C_{18}$ (ppm) | $C_{18}C_{18}$ (ppm) |
| --- | --- | --- | --- |
| Comparative example -as prepared | BDL | BDL | BDL |
| Example 4 -as prepared | 1.93 | 0.0881 | 1.83 |
| Example 4 - 3 m | BDL | BDL | BDL |
| Example 4 - 6 m | 0.0152 | BDL | BDL |

APPENDIX-A

**Experimental set-up of Bottle-tube displacement.**

The most prevalent acids found in wine are tartaric acid, malic acid, and citric acid and concentration of these fruity acids in wine at harvest are 2.5-5, 1-4, and <1 g/l, respectively. Among them tartaric acid is the preferred one since it is stable against microbial degradation. Malic acid can degrade to lactic acid and citric acid to diacetyl and acetic acid and give buttery aroma to some wines. Hence, in this study 1% tartaric acid solution has been considered as a simulant of wine to study the $CO_2$ release due to the reaction of tartaric acid with the active layer of the multi-layered film. A typical experimental set-up of bottle-tube displacement in order to determine the $CO_2$ release is presented in **Photograph 1.** The set-up was then placed to be stationary where it cannot be easily interrupted so that any movement of the drop/bubble in the tube is due to the pressure change occurring in the head space of the pouch. Such movement of bubble is believed to be due to the release of $CO_2$ from the reaction of the tartaric acid solution and the PE/$CaCO_3$ film liner. In a separate experiment (lime water test), the release of $CO_2$ has been confirmed. The headspace was kept constant at 2.2 % irrespective of pouch volume. The displacement (D) of the drop/bubble was then measured in different time intervals, and the volume of the gas was estimated according to the equation 1.

$$V = \pi\, r^2 D \ldots\ldots\ldots\ldots\ldots\ldots\ldots\ldots\ldots [1]$$

Where, r is the inner radius of the tube and D is the measured displacement.

REFERENCES

1. Roussel MD, Cara JF, Guy AR, Shaw LG. Calcium carbonate barrier films and uses thereof. 2009, US2009/0324979A1.
2. Bader MJ. Multi-layer, white captivated bioriented polyethylene film with a high water vapor transmission rate. 2004, EP1439956 A1.

3. Antoon Jr MK, Hill DJ. Breathable microporous film and methods for making it. 1991, US 5011698.

4. Cancio LV, Wu P-C. Cross-tearable decorative sheet material. 1981, US 4298647.

5. Sakurai H, Moriguchi K, Katayama Y. inorganic filler=incorporated ethylene polymer film. 1980, US 4219453.

6. Garofalo E, Scarfato P, Incarnato L. Tuning of co-extrusion processing conditions and film layout to optimize the performance of multilayer nanocomposite films for food packaging. Polymer Composites, 2017, DOI 10.1002/pc.24323.

7. Federal Department of Home Affairs FDHA Federal Food Safety and Veterinary Office FSVO Annex 10 of the Ordinance of the FDHA on materials and articles intended to come into contact with food-stuffs, List of permitted substances for the production of packaging inks, and related requirements, 2017.

8. EFSA Panel on Food Contact Materials, Enzymes, Flavourings and Processing Aids (CEF). EFSA J. 2015, 13, 4285.

## Claims

1. A composite active flexible polymeric film for containers for containing acidic foodstuffs which are beverages containing fruity acids material, which film includes an inner active layer of a polyethylene calcium carbonate composite, which layer generates carbon dioxide gas when in contact with the acidic material to settle in the headspace of the container,
   **characterized in that**

   an outer layer is provided which is a composite passive barrier layer is polyamide based and includes nano clay particles, and
   a polyacrylic acid (PAA) is provided as a tie layer to tie the two layers together, which layers are coextruded and blown films.

2. A composite film as claimed in Claim 1, wherein the $CaCO_3$ particles are in the micron to nano sized range and incorporated into the polymer.

3. A composite film as claimed in Claim 2, wherein the active layer includes a blend of Linear Low Density Polyethylene (LLDPE) and Low Density Polyethylene (LDPE) and $CaCO_3$.

4. A composite film as claimed in Claim 3, wherein the ratio of LLDPE to LDPE is selected to be between 20:80 and 10:90.

5. A composite film as claimed in any one of claims 2 to 4, wherein the weight percentage of $CaCO_3$ is selected from a range of between 15 and 35 weight percent.

6. A composite film as claimed in any one of claims 1 to 5, wherein an inner active layer of the film is separate from an outer layer to form an active layer container or bag inside the outer layer.

7. Container constructed from a composite active flexible polymeric film as claimed in any one of claims 1 to 6.

8. Use of an inner active layer in a composite film according to any of claim 1 to 6 comprising a polyethylene calcium carbonate composite, as a source of carbon dioxide gas when in contact with the acidic material.

## Patentansprüche

1. Ein zusammengesetzter aktiver flexibler Polymerfilm für Behälter zur Aufbewahrung von sauren Lebensmitteln, die Getränke mit fruchtigen Säuren enthalten, wobei der Film eine innere aktive Schicht aus einem Polyethylen-Calciumcarbonat-Verbundstoff umfasst, die bei Kontakt mit dem sauren Material Kohlendioxidgas erzeugt, das sich im Kopfraum des Behälters ansammelt,
   **dadurch gekennzeichnet, dass**

   eine äußere Schicht vorgesehen ist, die eine zusammengesetzte passive Barriereschicht auf Polyamidbasis ist und Nanotonteilchen enthält, und
   eine Polyacrylsäure (PAA) als Bindemittelschicht vorgesehen ist, um die beiden Schichten miteinander zu verbinden, wobei die Schichten coextrudiert und geblasene Folien sind.

2.  Ein zusammengesetzter Film nach Anspruch 1, wobei die $CaCO_3$-Teilchen im Mikro- bis Nanogrößenbereich liegen und in das Polymer eingearbeitet sind.

3.  Ein zusammengesetzter Film nach Anspruch 2, wobei die aktive Schicht eine Mischung aus linearem Polyethylen niedriger Dichte (LLDPE), Polyethylen niedriger Dichte (LDPE) und $CaCO_3$ enthält.

4.  Ein zusammengesetzter Film nach Anspruch 3, wobei das Verhältnis von LLDPE zu LDPE zwischen 20:80 und 10:90 gewählt wird.

5.  Ein zusammengesetzter Film nach einem der Ansprüche 2 bis 4, wobei der Gewichtsanteil von $CaCO_3$ aus einem Bereich zwischen 15 und 35 Gewichtsprozent gewählt wird.

6.  Ein zusammengesetzter Film nach einem der Ansprüche 1 bis 5, wobei eine innere aktive Schicht des Films von einer äußeren Schicht getrennt ist, um einen aktiven Schichtbehälter oder -beutel innerhalb der äußeren Schicht zu bilden.

7.  Behälter, hergestellt aus einem zusammengesetzten aktiven flexiblen Polymerfilm nach einem der Ansprüche 1 bis 6.

8.  Verwendung einer inneren aktiven Schicht in einem zusammengesetzten Film nach einem der Ansprüche 1 bis 6, umfassend einen Polyethylen-Calciumcarbonat-Verbundstoff, als Quelle für Kohlendioxidgas bei Kontakt mit dem sauren Material.

**Revendications**

1.  Un film polymère composite actif flexible pour contenants destinés à contenir des produits alimentaires acides qui sont des boissons contenant des matières acides fruitées, ledit film comprenant une couche active interne d'un composite de carbonate de calcium et de polyéthylène, laquelle couche génère du dioxyde de carbone lorsqu'elle est en contact avec la matière acide pour se déposer dans l'espace de tête du contenant,
    **caractérisé en ce que**

    une couche externe est fournie qui est une couche barrière passive composite à base de polyamide et comprend des particules de nano-argile, et
    un acide polyacrylique (PAA) est fourni comme couche de liaison pour lier les deux couches ensemble, ces couches étant des films coextrudés et soufflés.

2.  Un film composite selon la revendication 1, dans lequel les particules de $CaCO_3$ sont de taille micronique à nanométrique et incorporées dans le polymère.

3.  Un film composite selon la revendication 2, dans lequel la couche active comprend un mélange de polyéthylène basse densité linéaire (LLDPE), de polyéthylène basse densité (LDPE) et de $CaCO_3$.

4.  Un film composite selon la revendication 3, dans lequel le rapport de LLDPE à LDPE est choisi entre 20:80 et 10:90.

5.  Un film composite selon l'une quelconque des revendications 2 à 4, dans lequel le pourcentage en poids de $CaCO_3$ est choisi dans une plage comprise entre 15 et 35 pour cent en poids.

6.  Un film composite selon l'une quelconque des revendications 1 à 5, dans lequel une couche active interne du film est séparée d'une couche externe pour former un contenant ou un sac à couche active à l'intérieur de la couche externe.

7.  Contenant construit à partir d'un film polymère composite actif flexible selon l'une quelconque des revendications 1 à 6.

8.  Utilisation d'une couche active interne dans un film composite selon l'une quelconque des revendications 1 à 6 comprenant un composite de carbonate de calcium et de polyéthylène, comme source de dioxyde de carbone lorsqu'en contact avec la matière acide.

Figure 1. The scanning electron microscope (SEM) image captured on the freeze-fractured cross-sections of the films presented as examples.

Figure 2. The graphical representation of $CO_2$ (volume) released over time.

Figure 3. Different configurations and embodiments of the bag in a box application.

**Photograph 1.** Typical bottle-tube displacement set-up for the quantification of carbon dioxide released from the film containing PE active as inner layer.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2005037162 A1
- US 2005001204 A1
- US 2004105942 A
- CN 103407259
- US 20090324979 A1
- EP 1439956 A1
- US 5011698 A
- US 4298647 A
- US 4219453 A

**Non-patent literature cited in the description**

- **GAROFALO E ; SCARFATO P ; INCARNATO L**. Tuning of co-extrusion processing conditions and film layout to optimize the performance of multi-layer nanocomposite films for food packaging. *Polymer Composites*, 2017
- EFSA Panel on Food Contact Materials, Enzymes, Flavourings and Processing Aids (CEF). *EFSA J.*, 2015, vol. 13, 4285
- **GAROFALO E ; SCARFATO P ; INCARNATO L.** Tuning of co-extrusion processing conditions and film layout to optimize the performance of multilayer nanocomposite films for food packaging. *Polymer Composites*, 2017
- Federal Department of Home Affairs FDHA Federal Food Safety and Veterinary Office FSVO Annex 10 of the Ordinance of the FDHA on materials and articles intended to come into contact with food-stuffs. *List of permitted substances for the production of packaging inks, and related requirements*, 2017